# EUROPÄISCHE PATENTSCHRIFT

(11) **EP 3 134 675 B1**
(45) Veröffentlichungstag und Bekanntmachung des Hinweises auf die Patenterteilung: **04.04.2018**
(21) Anmeldenummer: 15718362.5
(22) Anmeldetag: 23.04.2015
(51) Int. Cl.: F21S 4/00, G02B 19/00, F21V 5/00, F21V 5/02, F21V 5/04, F21V 7/00, F21K 99/00, F21S 8/10, F21V 13/04

(54) **OPTISCHES ELEMENT FÜR EINE LED, LED-ANORDNUNG MIT EINEM SOLCHEN OPTISCHEN ELEMENT, SOWIE LEUCHTE MIT EINER SOLCHEN LED-ANORDNUNG**
OPTICAL ELEMENT FOR AN LED, LED SYSTEM WITH SAID OPTICAL ELEMENT AND LIGHTING DEVICE WITH SUCH A LED SYSTEM
ELEMENT OPTIQUE POUR UNE DEL, SYSTEME DE DEL AVEC UN TEL ELEMENT OPTIQUE ET LAMPE AVEC UN TEL SYSTEME DE DEL

(30) Priorität: 25.04.2014 DE 202014101954 U
(43) Veröffentlichungstag der Anmeldung: 01.03.2017
(73) Patentinhaber: Zumtobel Lighting GmbH, 6850 Dornbirn (AT)
(72) Erfinder: MACHATE, Andreas, 88239 Wangen im Allgäu (DE)
(74) Vertreter: Thun, Clemens
(86) Internationale Anmeldenummer: PCT/EP2015/058763
(87) Internationale Veröffentlichungsnummer: WO 2015/162196

(56) Entgegenhaltungen:
- FR-A1- 2 841 966
- GB-A- 531 185
- US-A1- 2005 190 564
- US-A1- 2008 259 630
- US-A1- 2012 063 141

## Beschreibung

Die Erfindung betrifft ein optisches Element zur Beeinflussung eines von wenigstens einer LED (LED: Licht emittierende Diode) abgestrahlten Lichts. Weiterhin betrifft die Erfindung eine LED-Anordnung mit einem solchen optischen Element, sowie eine Leuchte mit einer solchen LED-Anordnung.

Aus dem Stand der Technik ist ein Linsenkörper für eine LED bekannt, der etwa pyramidenstumpfartig geformt ist. Auf einer rückwärtigen Seite weist der Linsenkörper eine Lichteintrittsfläche für den Eintritt des Lichts auf und auf der gegenüberliegenden Vorderseite eine Lichtaustrittsfläche, über die das Licht wieder abgegeben wird. Die Lichteintrittsfläche ist dabei durch eine Ausnehmung mit einer Bodenfläche und einer Mantelfläche gebildet, wobei die LED so positioniert wird, dass sie in diese Ausnehmung hinein ragt. Ein Teil des Lichts, der über die Bodenfläche der Ausnehmung in den Linsenkörper eintritt, wird beim Eintritt an der Bodenfläche und beim Austritt an der Lichtaustrittsfläche jeweils gebrochen, dazwischen erfährt dieses Licht keine Richtungsumlenkung. Ein weiterer Teil des Lichts, der über die Mantelfläche der Ausnehmung in den Linsenkörper eintritt, wird beim Eintritt an der Mantelfläche gebrochen, an einer äußeren Mantelfläche des Linsenkörpers total reflektiert und anschließend unter einer weiteren Brechung über die Lichtaustrittsfläche abgegeben. Auf diese Weise lässt sich eine gewünschte Richtungsverteilung des von dem Linsenkörper abgegebenen Lichts bewirken; dabei lässt sich das Licht so lenken, dass es nach vorne in gerichteter Weise, insbesondere entblendet abgegeben wird.

Allerdings ist mit diesem Linsenkörper lediglich eine Lichtlenkung in einen vorwärts gerichteten Raumbereich möglich. Wenn ein Teil des Lichts auch zur Seite oder gar rückwärts abgegeben werden soll, wie dies beispielsweise zur Erzeugung einer indirekten Beleuchtung erwünscht sein kann, sind zur weitergehenden Lichtumlenkung entsprechende weitere optische Elemente erforderlich. Beispielsweise ist es aus dem Stand der Technik bekannt, hierzu gesonderte Lichtquellen vorzusehen.

Aus der US 2012/0063141 A1 ist ein optisches Element mit einem Hauptbereich und einem Seitenbereich bekannt. Der Hauptbereich weist eine rückwärtige Lichteintrittsfläche und eine vordere Lichtaustrittsfläche auf. Ein Teil des Lichts wird auch über den Seitenbereich abgegeben.

Aus der US 2008/0259630 A1 ist ein optisches Element für eine LED bekannt, das eine innere Linse und einen flügelartig an diesen angegliederten Seitenbereich umfasst.

Aus der US 2005/0190564 A1 ist eine Fahrzeugleuchte mit einem optischen Element bekannt.

Der Erfindung liegt die Aufgabe zugrunde, ein entsprechendes verbessertes optisches Element anzugeben. Insbesondere soll mit dem optischen Element eine Lichtabgabe in einen insgesamt größeren Raumwinkelbereich ermöglicht sein. Außerdem sollen eine entsprechende verbesserte LED-Anordnung sowie eine entsprechende verbesserte Leuchte angegeben werden.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist ein optisches Element zur Beeinflussung eines von wenigstens einer LED abgestrahlten Lichts vorgesehen, das einen Hauptbereich mit einer rückwärtigen Lichteintrittsfläche und einer vorderen Lichtaustrittsfläche aufweist, wobei die vordere Lichtaustrittsfläche zur Abgabe eines Teils des Lichts nach vorne ausgestaltet ist. Weiterhin weist das optische Element einen flügelartig an den Hauptbereich angegliederten Seitenbereich auf, an dem eine weitere Lichtaustrittsfläche für eine Abgabe eines weiteren Teils des Lichts in eine seitliche Richtung und/oder in eine rückwärtige Richtung ausgestaltet ist.

Durch den flügelartigen Seitenbereich lässt sich vorteilhaft ein Teil des Lichts auch zur Seite und/oder in den rückwärtigen Raumbereich lenken.

Erfindungsgemäß umfasst hierzu die Lichteintrittsfläche einen vorzugsweise konvexen mittleren Bereich, sowie einen Mantelbereich, wobei sich der Mantelbereich lediglich teilweise um den mittleren Bereich herum erstreckt und/oder an unterschiedlichen Stellen unterschiedliche Höhen aufweist. Auf diese Weise ist ermöglicht, dass ein Teil des von der LED abgegebenen Lichts nicht über die Lichteintrittsfläche in den Hauptbereich eintritt, sondern unmittelbar zu dem flügelartigen Seitenbereich gelangen kann. Dementsprechend ist weiterhin vorzugsweise das optische Element derart gestaltet, dass der weitere Teil des Lichts neben dem Mantelbereich vorbei strahlt und anschließend den Seitenbereich erreicht.

Vorzugsweise weist der Seitenbereich einen ersten Oberflächenbereich und einen, Letzterem gegenüberliegenden zweiten Oberflächenbereich auf, wobei diese beiden Oberflächenbereiche zur Lenkung des weiteren Teils des Lichts ausgestaltet sind. Auf diese Weise lässt sich eine besonders geeignete Lichtumlenkung zur Seite bzw. in den rückwärtigen Raum erzielen.

Vorzugsweise ist der erste Oberflächenbereich Teil einer, an dem Seitenbereich ausgebildeten, vorzugsweise linearen Prismenstruktur. Hierdurch ist eine gezielte Lichtlenklung besonders geeignet ermöglicht.

Vorzugsweise bildet der zweite Oberflächenbereich einen Teil der weiteren Lichtaustrittsfläche. Auf diese Weise lässt sich eine entsprechende Lichtumlenkung auf besonders kleinem Raum erzielen.

Vorzugsweise ist der zweite Oberflächenbereich dazu ausgestaltet, den weiteren Teil des Lichts zumindest teilweise für eine Abgabe in die seitliche Richtung zu brechen und/oder zumindest teilweise für eine Abgabe in die rückwärtige Richtung total zu reflektieren. Auf diese Weise lässt sich mit dem zweiten Oberflächenbereich eine Lichtabgabe sowohl zur Seite, als auch in den rückwärtigen Bereich erzielen.

Vorzugsweise weist der Hauptbereich einen ersten Abschnitt auf, an dem die rückwärtige Lichteintrittsfläche und die vordere Lichtaustrittsfläche ausgebildet sind, sowie wenigstens einen weiteren Abschnitt, der analog zu dem ersten Abschnitt gestaltet ist. Auf diese Weise eignet sich das optische Element besonders zur Beeinflussung von Licht, das von mehreren LEDs abgestrahlt wird.

Vorzugsweise sind dabei der erste Abschnitt und der wenigstens eine weitere Abschnitt sich entlang einer Längsachse erstreckend angeordnet. Hierdurch lässt sich besonders geeignete lineare Lichtabgabe erzielen.

Vorzugsweise sind der Hauptbereich und der Seitenbereich einstückig ausgebildet. Alternativ können diese beiden Bereiche aus zwei getrennten Bauteilen zusammengesetzt gestaltet sein.

Vorzugsweise ist der Seitenbereich sich um den Hauptbereich herum erstreckend gestaltet, vorzugsweise ringförmig geschlossen. Hierdurch eignet sich das optische Element beispielsweise besonders für einen Einsatz in einer Feuchtraumleuchte.

Vorzugsweise ist das optische Element herstellungstechnisch vorteilhaft in Form eines Spritzgussteils gestaltet.

Gemäß einem weiteren Aspekt der Erfindung ist eine LED-Anordnung vorgesehen, die ein erfindungsgemäßes optisches Element aufweist, sowie wenigstens eine LED, die derart angeordnet ist, dass ein von der LED abgestrahltes Licht über die rückwärtige Lichteintrittsfläche in das optische Element eintritt und ein Teil des Lichts über die vordere Lichtaustrittsfläche nach vorne abgegeben wird und ein weiterer Teil des Lichts über die weitere Lichtaustrittsfläche in eine seitliche Richtung und/oder in eine rückwärtige Richtung abgegeben wird.

Gemäß einem noch weiteren Aspekt der Erfindung ist eine Leuchte mit einer erfindungsgemäßen LED-Anordnung vorgesehen, insbesondere in Form einer Deckenleuchte, wobei die Leuchte derart gestaltet ist, dass in einer, für einen Betrieb der Leuchte vorgesehenen Orientierung der nach vorne abgegebene Teil des Lichts zur Erzeugung einer Direktbeleuchtung nach unten abgegeben wird und der weitere Teil des Lichts zur Erzeugung einer indirekten Beleuchtung abgegeben wird.

Die Erfindung wird im Folgenden anhand eines Ausführungsbeispiels und mit Bezug auf die Zeichnungen näher erläutert. Es zeigen:
- Fig. 1: eine perspektivische Skizze zu einem erfindungsgemäßen optischen Element,
- Fig. 2: eine Querschnittskizze durch das optische Element, normal zu dessen Längsachse,
- Fig. 3: eine Prinzip-Skizze zur Illustration der Lichtumlenkung durch das optische Element,
- Fig. 4: eine normale Ansicht auf die Rückseite eines Abschnitts des optischen Elements,
- Fig. 5: einen Längsschnitt durch einen Abschnitt des Hauptbereichs des optischen Elements,
- Fig. 6: einen perspektivische Skizze eines Abschnitts des optischen Elements und einer LED,
- Fig. 7: eine Prinzip-Skizze zum Strahlenverlauf des weiteren Teils des Lichts, wobei die Strahlen an dem zweiten Oberflächenbereich gebrochen werden,
- Fig. 8: eine entsprechende Prinzip-Skizze zum Strahlenverlauf des weiteren Teils des Lichts, wobei die Strahlen an dem zweiten Oberflächenbereich gebrochen und total reflektiert werden,
- Fig. 9: eine perspektivische Skizze eines Abschnitts des optischen Elements gemäß einer Variante mit einer zusätzlichen prismatischen Struktur,
- Fig. 10: eine entsprechende Skizze aus einer etwas anderen Blickrichtung,
- Figuren: 11 und 12 perspektivische Skizzen zu dem optischen Element gemäß der in den Figuren 9 und 10 gezeigten Variante,
- Fig. 13: eine perspektivische Skizze des optischen Elements gemäß der Variante,
- Fig. 14: eine Skizze zu einer alternativen Ausführung, bei der der Hauptbereich und der Seitenbereich als aus zwei getrennten Bauteilen zusammengesetzt gestaltet sind,
- Fig. 15: eine Skizze zu einer Ausführung, bei der sich der Seitenbereich auf drei Seiten des Hauptbereichs erstreckt,
- Fig. 16: eine Skizze zu einer weiteren Variante, bei der der Linsenbereich des Hauptbereichs einen in erster Näherung rechteckigen Querschnitt aufweist und
- Figuren 17 und 18: Skizzen zu zwei weiteren alternativen Ausführungsformen.

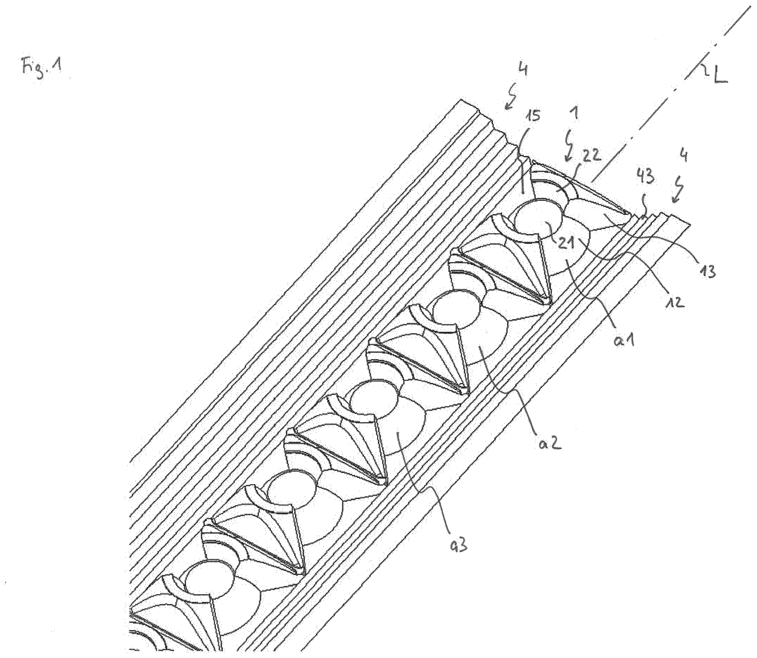

Fig. 1 zeigt eine perspektivische Skizze eines Abschnitts eines erfindungsgemäßen optischen Elements. Das optische Element ist zur Beeinflussung eines, von wenigstens einer (in Fig. 1 nicht gezeigten) LED abgestrahlten Lichts ausgebildet. Eine entsprechende Anordnung, die das optische Element und die wenigstens eine LED umfasst, wird hier als LED-Anordnung bezeichnet.

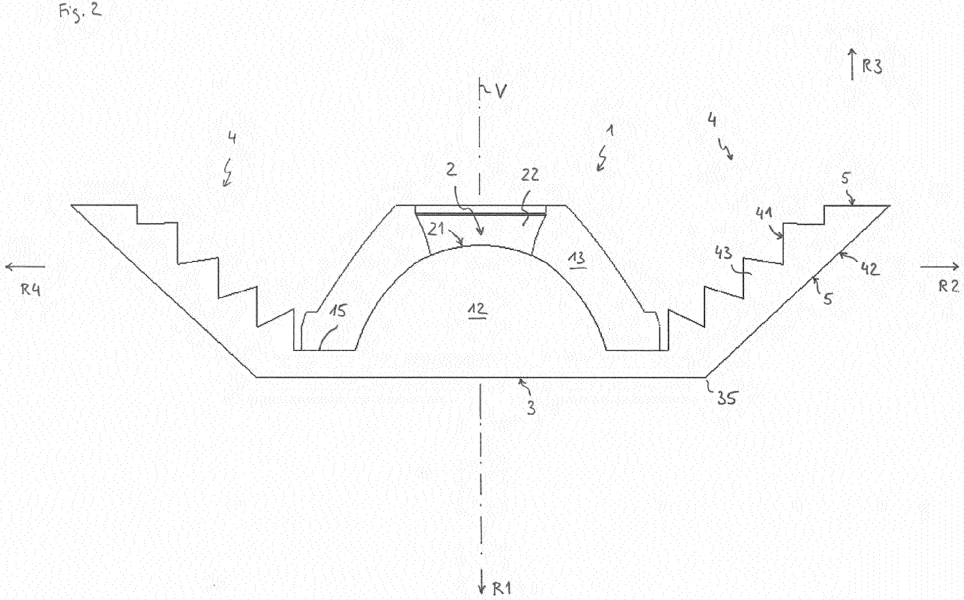

Im gezeigten Beispiel ist das optische Element insgesamt länglich, so dass es sich entlang einer Längsachse *L* erstreckt. In Fig. 2 ist ein normal zu der Längsachse *L* gelegter Querschnitt durch das optische Element gezeigt.

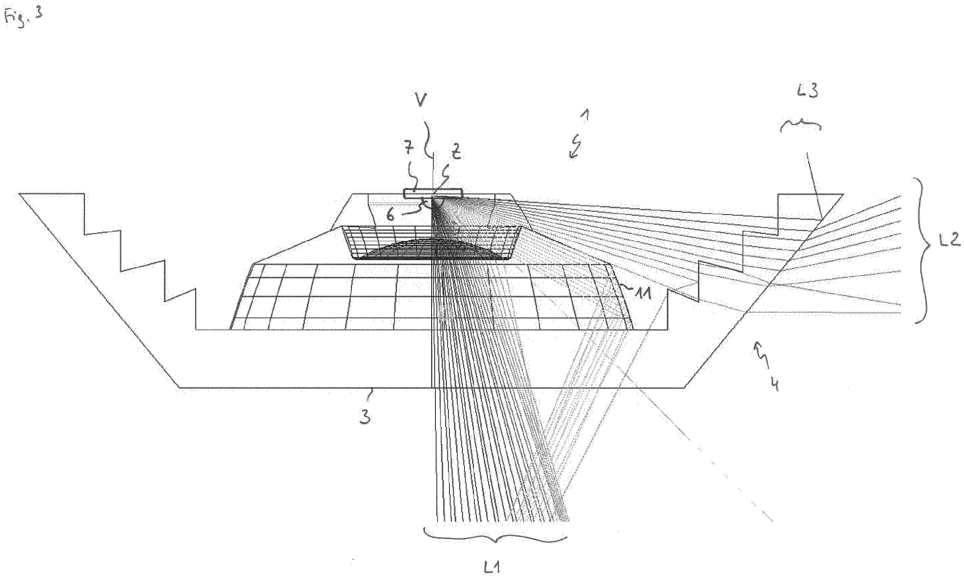

Fig. 3 zeigt einen entsprechenden Querschnitt einer leicht abwandelten Ausführung des optischen Elements, wobei exemplarisch erste Lichtstrahlen *L1,* zweite Lichtstrahlen *L2* und dritte Lichtstrahlen *L3* zur Illustration einer Umlenkung des von der wenigstens einen LED abgestrahlten Lichts eingezeichnet sind. Dementsprechend ist ein Ort Z, von dem aus die Lichtstrahlen *L1, L2, L3* ihren Ursprung nehmen, für die Positionierung der - hier skizzierten - LED 6 relativ zu dem optischen Element vorgesehen.

Die LED 6 ist vorzugsweise auf einer Platine 7 angeordnet. In dieser Beschreibung wird davon ausgegangen, dass die LED 6 gegenüber der Vertikalen V so orientiert ist, dass eine maximale Lichtabgabe der LED 6 senkrecht nach unten erfolgt. Wie dementsprechend üblich, ist die Platine 7 hier in einer horizontalen Ebene ausgerichtet vorgesehen. Allerdings kann im Allgemeinen auch eine anderweitige Ausrichtung der LED 6 bzw. der Platine 7 vorgesehen sein. In einem solchen Fall sind die Richtungsangaben etc. entsprechend umzudeuten.

Das optische Element weist einen Hauptbereich 1 auf, sowie einen, flügelartig an den Hauptbereich 1 angegliederten Seitenbereich 4.

Der Hauptbereich 1 weist eine rückwärtige Lichteintrittsfläche 2 auf und eine vordere Lichtaustrittsfläche 3. Die vordere Lichtaustrittsfläche 3 ist dabei für die Abgabe eines Teils des Lichts, hier durch die ersten Lichtstrahlen *L1* symbolisch dargestellt, ausgebildet. Dabei kann vorgesehen sein, dass die ersten Lichtstrahlen *L1*, wie eingangs angegeben und insoweit aus dem Stand der Technik bekannt, dadurch gebildet sind, dass sie jeweils an der Lichteintrittsfläche 2 und an der Lichtaustrittsfläche 3 gebrochen werden und dazwischen teilweise auch an einer äußeren Mantelfläche 11 des Hauptbereichs 1 eine interne Totalreflexion erfahren.

In dieser Beschreibung wird davon ausgegangen, dass das optische Element gegenüber der Vertikalen *V* so orientiert ist, dass der genannte Teil des Lichts *L1*, der über die Lichtaustrittsfläche 3 abgegeben wird, in den unteren Halbraum abgegeben wird, insbesondere zumindest im Wesentlichen symmetrisch um die Vertikale V. Beispielsweise kann die Gestaltung so sein, dass die ersten Lichtstrahlen *L1* mit der Vertikalen V einen Winkel einschließen, der kleiner als 60° ist. Wenn die LED-Anordnung als Teil einer entsprechenden LED-Leuchte verwendet wird, die als Deckenleuchte konzipiert ist, lässt sich auf diese Weise eine entblendete Lichtabgabe in den unteren Halbraum erzielen.

Vorzugsweise ist vorgesehen, dass die Lichtaustrittsfläche 3 zumindest in erster Näherung plan gestaltet ist; dabei wir hier von einer horizontalen Ausrichtung der Lichtaustrittsfläche 3 ausgegangen. Es kann jedoch auch eine andere Ausrichtung vorgesehen sein. In diesem Fall sind die Richtungsangaben wiederum entsprechend umzudeuten.

Gegenüber der LED 6 ist das optische Element vorzugsweise so ausgerichtet, dass die Lichtaustrittsfläche 3 normal zu derjenigen Richtung orientiert ist, in der die LED 6 am meisten Licht abgibt bzw. parallel zu der Platine 7.

Die in Fig. 2 angedeutete, entsprechend senkrecht nach unten weisende erste Richtung *R1* wird hier auch als "vorwärts" bzw. nach vorne" bezeichnet. Der Teil des Lichts *L1*, der über die vordere Lichtaustrittsfläche 3 abgegeben wird, wird dementsprechend "nach vorne" abgegeben.

An dem Seitenbereich 4 ist eine weitere Lichtaustrittsfläche 5 ausgestaltet, die für eine Abgabe eines weiteren Teils des Lichts, hier durch die zweiten Lichtstrahlen *L2* und die dritten Lichtstrahlen *L3* symbolisch dargestellt, ausgebildet ist. Dabei wird der weitere Teil des Lichts *L2, L3* in eine seitliche Richtung *R2* und/oder eine rückwärtige Richtung *R3* abgegeben. Insbesondere kann dabei die seitliche Richtung *R2* senkrecht zu der ersten Richtung *R1* gerichtet sein und die rückwärtige Richtung *R3* entgegengesetzt zu der ersten Richtung *R1*.

Die Formulierung "Abgabe in eine seitliche Richtung *R2*" soll hierbei bezeichnen, dass die zweiten Lichtstrahlen *L2* derart orientiert sind, dass sie mit der zweiten Richtung R2 einen Winkel einschließen, der kleiner als 45° ist, beispielsweise kleiner als 30°. Analoges gilt für die Formulierung "Abgabe in eine rückwärtige Richtung *R3*".

Beispielsweise kann die Gestaltung derart sein, dass die zweiten Lichtstrahlen *L2* mit der ersten Richtung *R1* einen Winkel einschließen, der zwischen 70° und 135° beträgt, vorzugsweise zwischen 80° und 130°, beispielsweise zwischen 85° und 130°.

Im gezeigten Beispiel wird ein erster Anteil *L2* des weiteren Teils des Lichts in die seitliche Richtung *R2* abgegeben und ein zweite Anteil *L3* in die rückwärtige Richtung *R3.*

Wie insbesondere aus den Figuren 1 und 2 hervorgeht, umfasst die Lichteintrittsfläche 2 einen mittleren Bereich 21 und einen Mantelbereich 22, der sich von dem mittleren Bereich 21 aus in den rückwärtigen Halbraum erstreckt. Dabei erstreckt sich der Mantelbereich 22 lediglich - wie beispielsweise in Fig. 1 gezeigt - teilweise um den mittleren Bereich 21 herum; alternativ oder ergänzend kann der Mantelbereich 22 an unterschiedlichen Stellen - mit Bezug auf den mittleren Bereich 21 - unterschiedliche Höhen aufweisen.

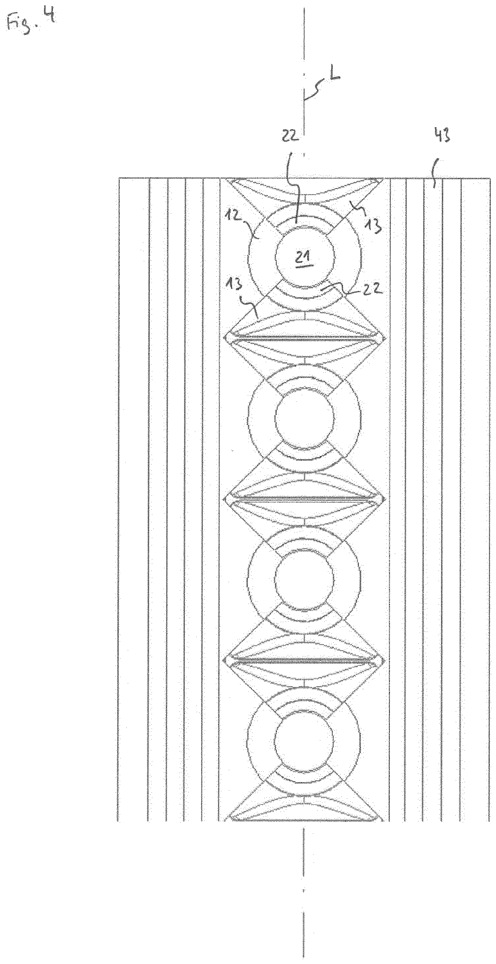

Bei der beispielsweise in Fig. 1 gezeigten Ausführung erstreckt sich der Mantelbereich 22 lediglich an zwei gegenüberliegenden Stellen entlang der Längsachse L, während an den beiden Stellen quer dazu kein entsprechender Mantelbereich ausgebildet ist. Dies geht auch aus Fig. 4 hervor, die eine normale Ansicht auf die Rückseite des optischen Elements zeigt. Hierin unterscheidet sich das optische Element von dem eingangs angegebenen Linsenkörper gemäß dem Stand der Technik, denn bei Letzterem ist die Ausnehmung durch eine Bodenfläche - die dem mittleren Bereich 21 entspricht - und einen Mantelbereich gebildet, der allseits um die Bodenfläche umlaufend ausgestaltet ist.

Im gezeigten Beispiel umfasst der Hauptbereich 1 einen "eigentlichen" Linsenbereich 12, der auf zwei gegenüberliegenden Seiten von wallartigen Umgebungsbereichen - im Folgenden als "Kollimator" 13 bezeichnet - umgeben ist; dabei ist der mittlere Bereich 21 der Lichteintrittsfläche 2 durch eine rückwärtige Oberfläche des Linsenbereichs 12 gebildet und der Mantelbereich 22 durch die wallartigen Umgebungsbereiche. Der Linsenbereich 12 kann beispielsweise nach oben konvex geformt sein. Der mittlere Bereich 21 ist im gezeigten Beispiel dementsprechend konvex geformt gestaltet.

Da diejenigen Lichtstrahlen der LED 6, die in den Linsenbereich 12 eintreten (zumindest größtenteils) zuvor keine Wechselwirkung mit dem optischen Element erfahren haben, stellt der Linsenbereich 12 sozusagen eine "primäre" Linse" dar.

Der Kollimator 13 dient zur Beeinflussung von flach von der LED abgegebenen Lichtstrahlen. So wird das entsprechend flach von der LED 6 abgegeben Licht von dem Kollimator 13 - wo vorhanden - "eingefangen" und steiler nach unten auf den Boden bzw. die vordere Lichtaustrittsfläche 3 gerichtet. Das - im Vergleich zum Stand der Technik - "übrig gebliebene" Kollimator-Stück ist vorzugsweise so gestaltet, dass das auftreffende flache Licht möglichst über die gesamte auszuleuchtende Bodenfläche, also die Lichtaustrittsfläche 3 verteilt wird.

Im Unterschied zum eingangs erwähnten Stand der Technik erstreckt sich also der Kollimator 13 nicht in geschlossen ringförmiger Form um den Linsenbereich 12 herum, bildet also keinen "Kollimator-Ring", sondern weist wenigstens eine Unterbrechung bzw. einen "Freischnitt" auf. Wenn - wie im gezeigten Beispiel der Fall - zwei Freischnitte vorgesehen sind, weist der Kollimator 13 dementsprechend zwei voneinander getrennte Abschnitte auf.

Die durch den Freischnitt gebildete Unterbrechung dient dazu, den weiteren Teil des Lichts *L2, L3* direkt auf den flügelartigen Seitenbereich 4 strahlen zu lassen. Allgemeiner formuliert ist das optische Element derart gestaltet, dass der weitere Teil des Lichts *L2, L3* neben dem Mantelbereich 22 vorbei strahlt und anschließend den Seitenbereich 4 erreicht. Dies geht auch aus Fig. 3 hervor, die die entsprechenden Lichtstrahlen *L2, L3* unbeeinflusst von dem Kollimator 13 zeigt.

Mit anderen Worten werden die Lichtstrahlen *L2, L3* des weiteren Lichts, die von der LED 6 entsprechend seitlich flach in Richtung auf den Seitenbereich 4 abgegeben werden, von dem Hauptbereich 1 nicht optisch beeinflusst, sondern treffen unmittelbar auf den Seitenbereich 4.

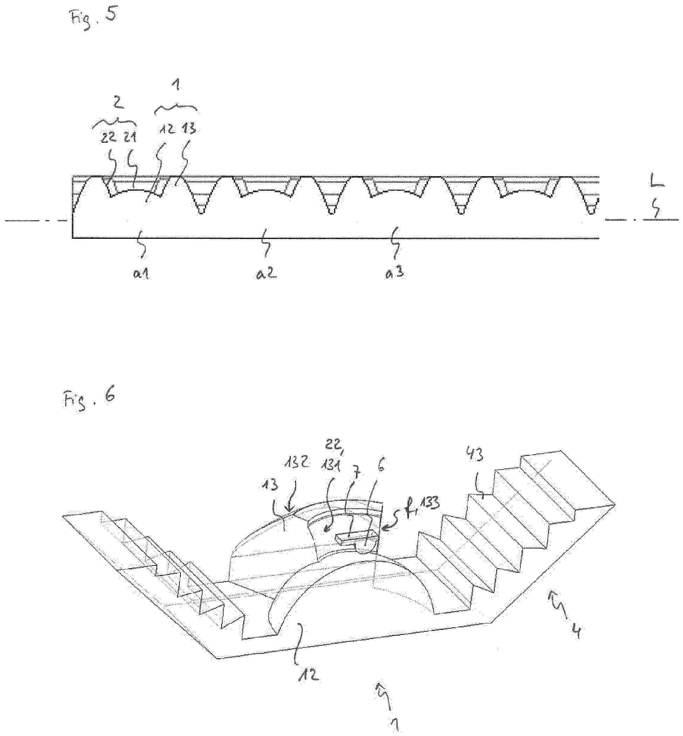

Wie aus Fig. 5 hervorgeht, die eine Skizze eines teilweisen Längsschnitts des optischen Elements entlang der Längsachse L zeigt, treffen die entsprechend flach in der durch die Längsachse L verlaufende Längsebene von der LED 6 abgestrahlten Lichtstrahlen auf den Kollimator 13 und werden im Weiteren, wie im eingangs angegebenen Stand der Technik prinzipiell angegeben, an einer äußeren Mantelfläche des Kollimators 13 intern total reflektiert und im Weiteren über die vordere Lichtaustrittsfläche 3 abgegeben. Daher lässt sich insbesondere erzielen, dass - im Längsschnitt betrachtet - das über die Lichtaustrittsfläche 3 abgegebene Licht entblendet nach vorne abgegeben wird.

Wie am besten aus Fig. 3 ersichtlich, ist zur Erzielung der genannten Wirkung die LED 6 vorzugsweise auf einer Höhe positioniert, die durch die Obergrenze des Kollimators 13 gegeben ist. Beispielsweise kann die LED 6
derart positioniert sein, dass sie sich nicht höher als der Kollimator 13 erstreckt, also mit anderen Worten nicht weiter in die dritte Richtung *R3* als der Kollimator 13.

Fig. 6 zeigt perspektivisch eine Skizze eines Abschnitts des optischen Elements mit der LED 6. Wie aus dieser Skizze hervorgeht, ist durch den "Freischnitt" des Kollimators 13 eine freigeschnittene Kollimatorfläche 133 oder kurz Freischnittfläche 133 gebildet, die vorzugsweise in einer vertikalen Ebenefverlaufend ausgebildet ist, die nicht genau durch den Mittelpunkt der LED 6 verläuft, sondern die lichtabgebende Oberfläche der LED 6 tangiert. Hierdurch lässt sich ausschließen, dass Lichtstrahlen, die von der LED 6 ausgehen, auf die entsprechende Freischnittfläche 133 treffen und im Weiteren in eine nicht gewünschte Richtung abgelenkt werden. Analoges gilt auch für die andere Begrenzungsfläche des Freischnitts. Allenfalls treffen Lichtstrahlen der LED 6 auf die Freischnittfläche 133, die zuvor über den Mantelbereich 22, also über eine Innenfläche 131 des Kollimators 13, in Letzteren eingetreten sind. Diese Strahlen treffen sehr flach von innen auf die Freischnittfläche 133, so dass sie dort eine interne Totalreflexion erfahren und im Weiteren an der Außenseite 132 des Kollimators 13 ein weiteres Mal totalreflektiert werden, bevor sie schließlich die nach vorne weisende Lichtaustrittsfläche 3 erreichen.

Wenn der Kollimator 13 wie oben erwähnt, an unterschiedlichen Stellen unterschiedlich hoch gegenüber dem mittleren Bereich 21 gestaltet ist, lässt sich erzielen, dass Lichtstrahlen der LED 6, die entsprechend schräg seitlich nach unten abgegeben werden, wie im eingangs erwähnten Stand der Technik der Fall, in den Hauptbereich 1 eintreten und an der Außenseite des Hauptbereichs 1 bzw. des Kollimators 13 total reflektiert werden.

Der Seitenbereich 4 weist vorzugsweise einen ersten Oberflächenbereich 41 und einen, Letzterem gegenüberliegenden zweiten Oberflächenbereich 42 auf, wobei diese beiden Oberflächenbereiche 41, 42 zur Lenkung des weiteren Teils des Lichts *L2, L3* ausgestaltet sind. Vorzugsweise ist der erste Oberflächenbereich 41 Teil einer, an dem Seitenbereich 4 ausgebildeten Prismenstruktur 43. Hierdurch lässt sich eine besonders geeignete Lichtlenkung erzielen. Wie aus Fig. 1 ersichtlich, ist die Prismenstruktur 43 dabei vorzugsweise linear gestaltet, insbesondere parallel zu der Längsachse L. Beispielsweise kann die Prismenstruktur 43 dreieckförmige Prismen aufweisen bzw. durch solche gebildet sein.

Vorzugsweise ist die Gestaltung derart, dass der weitere Teil des Lichts *L2, L3* ausgehend von der LED 6 seine erste Wechselwirkung mit dem optischen Element an dem ersten Oberflächenbereich 41 erfährt, also insbesondere nicht vor Auftreffen auf den ersten Oberflächenbereich 41 auf den Hauptbereich 1 trifft.

Wie aus den Figuren 2 und 3 hervorgeht, bildet weiterhin vorzugsweise der zweite Oberflächenbereich 42 einen Teil der weiteren Lichtaustrittsfläche 5. Vorzugsweise ist der zweite Oberflächenbereich 42 dazu ausgestaltet, den weiteren Teil des Lichts *L2, L3* zumindest teilweise für eine Abgabe in die seitliche Richtung *R2* zu brechen und/oder zumindest teilweise für eine Abgabe in die rückwärtige Richtung *R3* total zu reflektieren. Im gezeigten Beispiel ist die Gestaltung dementsprechend so, dass die zweiten Lichtstrahlen *L2* an dem zweiten Oberflächenbereich 42 des Seitenbereichs 4 gebrochen werden und die dritten Lichtstrahlen *L3* dort total reflektiert werden.

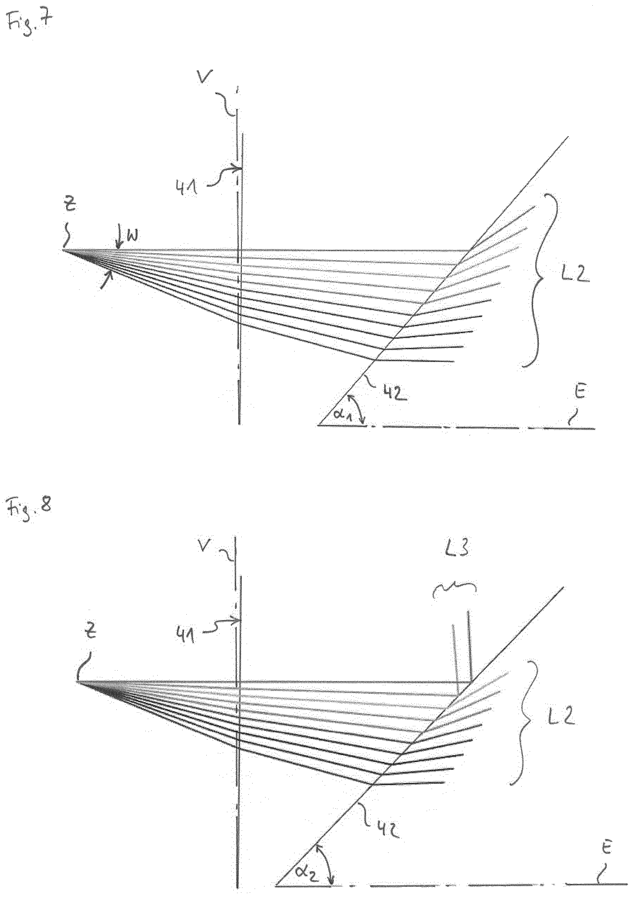

In den Figuren 7 und 8 ist dies anhand zweier beispielhafter Prinzip-Skizzen weitergehend veranschaulicht; entsprechende Berechnungen können vorteilhaft als Basis zur Auslegung des Seitenbereichs 4 dienen. In diesen Skizzen ist in einer Schnittebene normal zur Längsachse *L* der Ort *Z*, von dem aus die Lichtstrahlen *L1*, *L2, L3* ihren Ursprung nehmen, eingezeichnet, sowie Abschnitte des ersten Oberflächenbereichs 41 und des zweiten Oberflächenbereichs 42. Außerdem ist eine horizontale Ebene *E* eingezeichnet. Dabei ist angenommen, dass das optische Element aus PMMA (Polymethylmethacrylat) besteht und sich in Luft befindet.

In beiden Fällen ist der erste Oberflächenbereich 41 plan gestaltet und dabei um 1° gegenüber der Vertikalen V geneigt, und zwar in die Richtung *R2*. Auf diese Weise lässt sich erzielen, dass das optische Element vorteilhaft als Spritzgussteil gefertigt werden kann, denn es lässt sich hierdurch geeignet nach oben bzw. in die Richtung *R3* aus dem entsprechenden Spritzgusswerkzeug entnehmen. Der erste Oberflächenbereich 41 ist somit als "Entformungsschräge" von 1° ausgebildet.

In dem in Fig. 7 gezeigten Fall schließt der zweite Oberflächenbereich 42 mit der Horizontalen Ebene E einen Winkel *α1* = *50°* ein. Eingezeichnet sind Lichtstrahlen der LED, die nach Austritt aus dem zweiten Oberflächenbereich 42 nach schräg oben außen gerichtet verlaufen oder allenfalls horizontal verlaufen; wenn das optische Element in einer Leuchte, beispielsweise einer Deckenleuchte in der hier betrachteten Orientierung verwendet wird, können diese Lichtstrahlen also in der Praxis keine unerwünschte Blendung hervorrufen. Der Winkelbereich W, in dem diese Lichtstrahlen von der LED 6 abgegeben werden, beträgt etwa 23°.

In dem in Fig. 7 gezeigten Fall werden alle Lichtstrahlen an dem zweiten Oberflächenbereich 42 gebrochen. Wie in Fig. 8 exemplarisch gezeigt, lässt sich demgegenüber durch Veränderung der Neigung des zweiten Oberflächenbereichs 42 erzielen, dass ein Teil der hier betrachteten flach abgegebenen Strahlen an dem zweiten Oberflächenbereich 42 eine Totalreflexion erfährt und nach oben umgelenkt wird. In dem in Fig. 8 gezeigten Fall beträgt der entsprechende Winkel *α2* = *46°.* Selbstverständlich treten die in Fig. 8 skizzierten Strahlen *L2* im Weiteren wieder aus dem optischen Element nach oben aus, und zwar über einen Teil der weiteren Lichtaustrittsfläche 5, wie beispielsweise aus Fig. 3 hervorgeht.

In dem in Fig. 7 gezeigten Beispiel werden also die Strahlen für eine Abgabe in die seitliche Richtung *R2* an dem zweiten Oberflächenbereich 42 gebrochen. In dem in Fig. 8 gezeigten Beispiel werden die Strahlen für eine Abgabe in die seitliche Richtung R2 an dem zweiten Oberflächenbereich 42 gebrochen und für eine Abgabe in die rückwärtige Richtung *R3* an dem zweiten Oberflächenbereich 42 totalreflektiert.

Der weitere Teil des Lichts *L2, L3* eignet sich somit im Fall einer entsprechenden Deckenleuchte besonders zur Erzeugung einer indirekten Beleuchtung, beispielsweise einer Deckenaufhellung. Selbstverständlich muss das entsprechende Leuchtengehäuse so gestaltet sein, dass die Lichtstrahlen von der Leuchte entsprechend abgegeben werden können. Beispielsweise kann vorgesehen sein, dass das optische Element auf der betreffende Seite über die restliche Leuchte übersteht.

Der nach vorne bzw. unten abgegebene Teil des Lichts *L1* eignet sich in diesem Fall besonders zur Erzeugung einer direkten Beleuchtung. Dies ist auch aus energetischer Sicht vorteilhaft, weil im Fall einer typischen LED der über die vordere Lichtaustrittsfläche 3 abgegebene Teil des Lichts *L1* deutlich intensiver ist als der weitere Teil *L2, L3*, denn Letzterer stammt lediglich aus einem kleinen Teil der insgesamt von der LED abgegeben Strahlen und zudem besteht dieser Teil aus vergleichsweise flachen und somit vergleichsweise weniger intensiven Strahlen. Beispielsweise kann die LED-Anordnung derart ausgelegt sein, dass zwischen 5% und 20% des von der LED abgegebenen Lichts zur Erzeugung des weiteren Teils des Lichts *L2, L3* dienen.

Die in den Figuren 7 und 8 gezeigten Beispiele sind natürlich als solche nicht beschränkend. Beispielsweise kann vorgesehen sein, dass die Lichtstrahlen *L2* zumindest teilweise auch eine Richtungskomponente nach unten aufweisen, beispielsweise um spezielle Beleuchtungsanforderungen zu erfüllen.

Wie aus Fig. 2 ersichtlich, kann vorgesehen sein, dass der Hauptbereich 1 insbesondere lediglich an seinem unteren Ende mit dem Seitenbereich 4 verbunden ist; beispielsweise kann die Gestaltung derart sein, dass sich die vordere Lichtaustrittsfläche 3 bis unmittelbar an den Seitenbereich 4 erstreckt, beispielsweise - über eine Kante 35 - in die weitere Lichtaustrittsfläche 5 übergeht. Der Linsenbereich 12 ist beim hier gezeigten Beispiel vollständig von dem Seitenbereich 4 getrennt; dasselbe gilt auch für den Kollimator 13.

Wie beispielsweise aus Fig. 2 hervorgeht, erstreckt sich der Seitenbereich 4 beim hier gezeigten Beispiel auf zwei gegenüberliegenden Seiten des Hauptbereichs 1. Dabei ist der Seitenbereich 4 vorzugsweise auf beiden Seiten analog gestaltet. Beispielsweise kann vorgesehen sein, dass in einem Normalschnitt mit Bezug auf die Längsachse L betrachtet das optische Element spiegelsymmetrisch um eine Vertikale gestaltet ist, die durch die Lichteintrittsfläche 2 und die Lichtaustrittsfläche 3 des Hauptbereichs 1 verläuft. Dementsprechend lässt sich in eine weitere seitliche Richtung *R4*, die der zuerst genannten seitlichen Richtung *R2* entgegengesetzt ist, eine entsprechend analoge Lichtabgabe bewirken.

Wie in den Figuren 1 und 2 skizziert, weist im gezeigten Beispiel der Hauptbereich 1 eine plane, vorzugsweise parallel zu der Lichtaustrittsfläche 3 gestaltete, Bodenfläche 15 auf, von der aus sich der Linsenbereich 12 und der Kollimator 13 nach oben erstrecken. Diese Bodenfläche 15 erstreckt sich zur Seite hin bis unmittelbar an den Seitenbereich 4. Letzterer erstreckt sich dort von der Bodenfläche 15 ausgehend nach schräg oben. Dadurch ist - bei der hier betrachteten Orientierung der Anordnung die vordere Lichtaustrittsfläche 3 nach unten gerichtet und die weitere Lichtaustrittsfläche 5 zumindest teilweise nach schräg unten, so dass insoweit bei diesen Flächen eine Anlagerung von Staub zumindest weitgehend verhindert ist.

Die Bodenfläche 15 ist bei der in den Figuren 1 und 2 gezeigten Ausführung insgesamt plan gestaltet. Dabei kann die Bodenfläche 15 beispielsweise rau gestaltet sein. Hierdurch lässt sich erzielen, dass ein opal streuender Bereich in das optische Element integriert ist. Das von dem optischen Element abgegeben Licht weist in diesem Fall einen Streulichtanteil auf. Eine raue Gestaltung der Bodenfläche 15 lässt sich beispielsweise dadurch erzielen, dass das optische Element als Spritzgussteil gebildet ist, wobei die entsprechend korrespondierende Fläche im Spritzgusswerkzeug (sand-)gestrahlt ist.

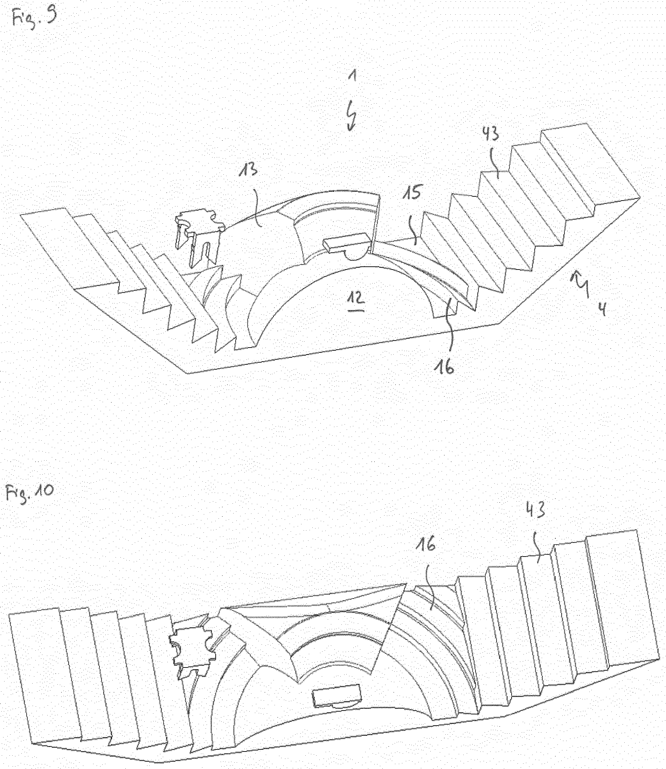

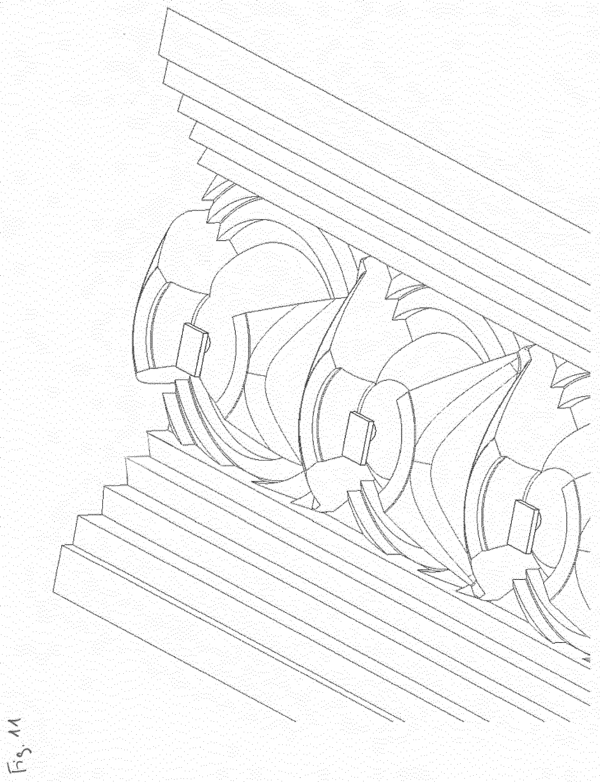

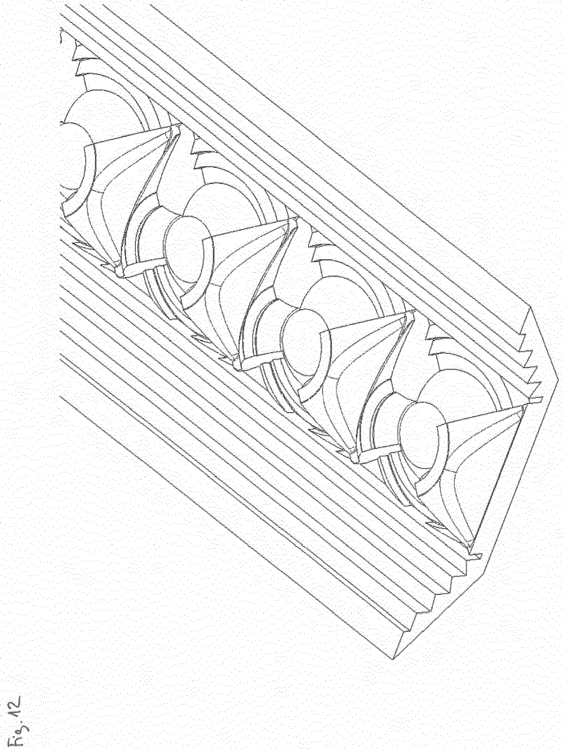

In den Figuren 9 bis 12 sind Skizzen zu einer Variante gezeigt, gemäß der der Bodenbereich 15 mit einer zusätzlichen prismatischen Struktur 16 für eine weitergehende Lichtlenkung versehen ist. Diese zusätzliche prismatische Struktur 16 kann beispielsweise Fresnel-artig gestaltet sein. Durch entsprechende Gestaltung der zusätzlichen prismatischen Struktur 16 lässt sich ein entsprechender Lichtanteil aufweiten oder auch bündeln.

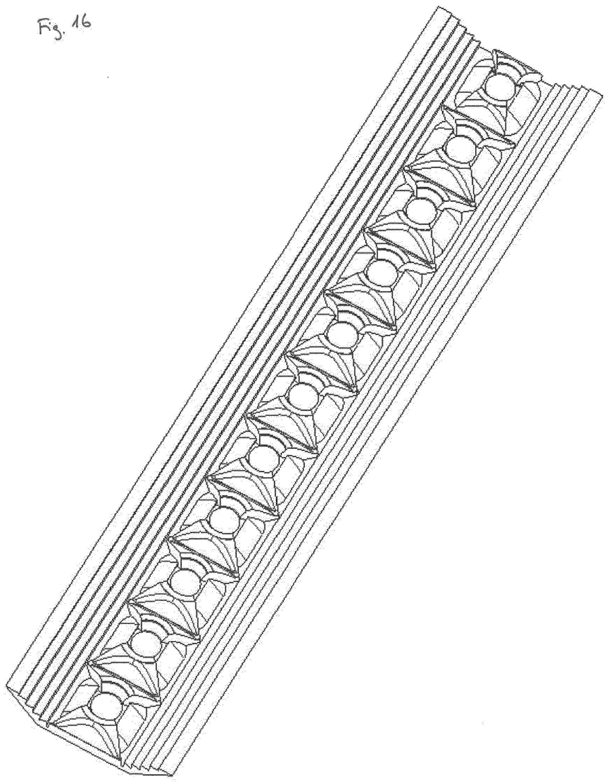

Bei den bisher beschriebenen Ausführungen ist der Linsenbereich 12 des Hauptbereichs 1 in einem horizontalen Querschnitt betrachtet kreisförmig. In Fig. 16 ist eine weitere Variante skizziert, bei der der Linsenbereich 12 des Hauptbereichs 1 einen in erster Näherung rechteckigen, insbesondere quadratischen horizontalen Querschnitt aufweist. Eine entsprechende LED-Anordnung erzeugt daher eine entsprechend geformte, sozusagen eine quadratische Abstrahlcharakteristik bzw. Lichtverteilung. Durch diese Gestaltung des Linsenbereichs 12 lässt sich erzielen, dass die Bodenfläche 15 vergleichsweise kleiner ist; der Linsenbereich 12 kann sich in diesem Fall auch praktisch ganz bis an den Seitenbereich 4 heran erstrecken, so dass praktisch keine entsprechende Bodenfläche 15 vorhanden ist oder die Bodenfläche 15 so klein ist, dass sie praktisch keinen merklichen Einfluss mit Bezug auf die Lichtabgabe hat. In diesem Fall ist es möglich, alle Lichtstrahlen - ohne entsprechende zusätzliche prismatische Struktur 16 - definiert zu lenken.

Wie beispielsweise aus Fig. 1 hervorgeht, weist beim gezeigten Beispiel der Hauptbereich 1 einen ersten Abschnitt *a1* auf, an dem die rückwärtige Lichteintrittsfläche 2 und die vordere Lichtaustrittsfläche 3 ausgebildet sind, sowie wenigstens einen weiteren Abschnitt *a2, a3,* der analog zu dem ersten Abschnitt *a1* gestaltet ist. Vorzugsweise sind dabei der erste Abschnitt *a1* und der wenigstens eine weitere Abschnitt *a2, a3* sich entlang der Längsachse L erstreckend angeordnet. Insbesondere kann vorgesehen sein, dass jeder Abschnitt *a1, a2, a3* zur Beeinflussung eines von einer LED oder einem LED-Cluster abgegebenen Lichts vorgesehen ist. Auf diese Weise lässt sich besonders geeignet eine lineare Lichtabgabestruktur erzeugen.

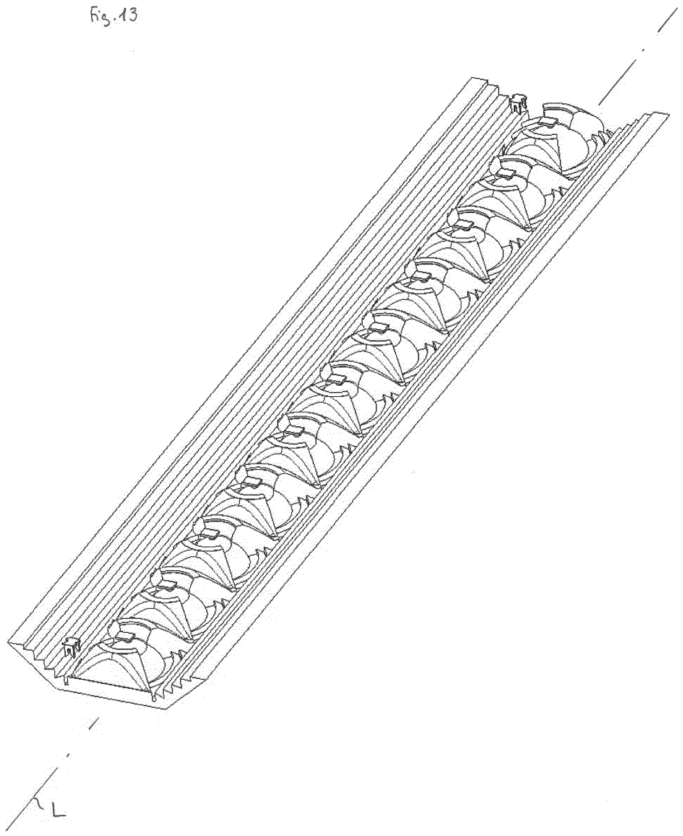

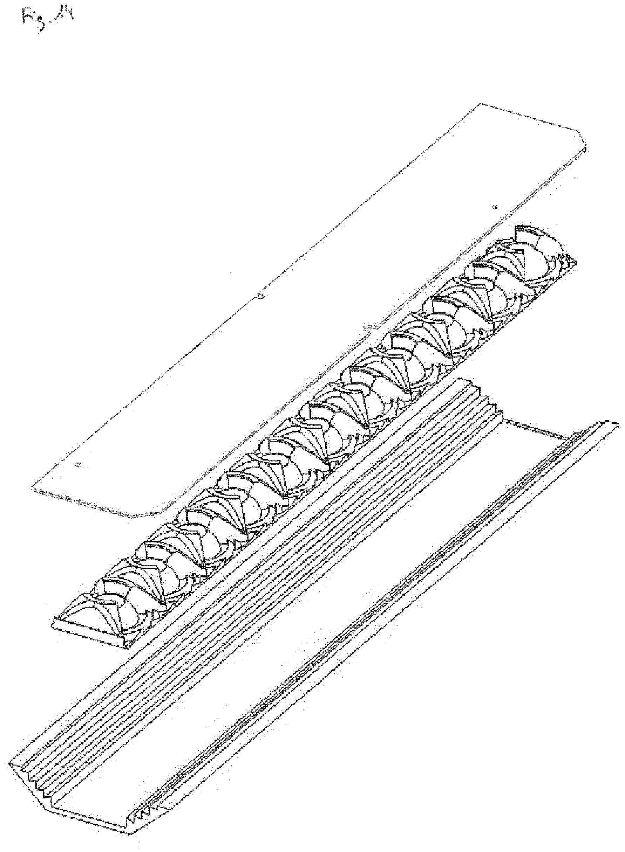

Der Hauptbereich 1 und der Seitenbereich 4 können - wie in Fig. 13 skizziert - einstückig ausgebildet sein; alternativ kann vorgesehen sein, dass das optische Element zweiteilig gestaltet ist - wie in Fig. 14 nach Art einer Explosionsdarstellung skizziert. Dabei kann insbesondere vorgesehen sein, dass ein oberer Anteil des Hauptbereichs 1 als eines der beiden Bauteile gestaltet ist und der Seitenbereich 4 zusammen mit einem unteren Anteil des Hauptbereichs 1 als das entsprechende zweite Bauteil. In Fig. 14 ist zusätzlich eine Platine skizziert, auf der die entsprechenden LEDs angeordnet sind.

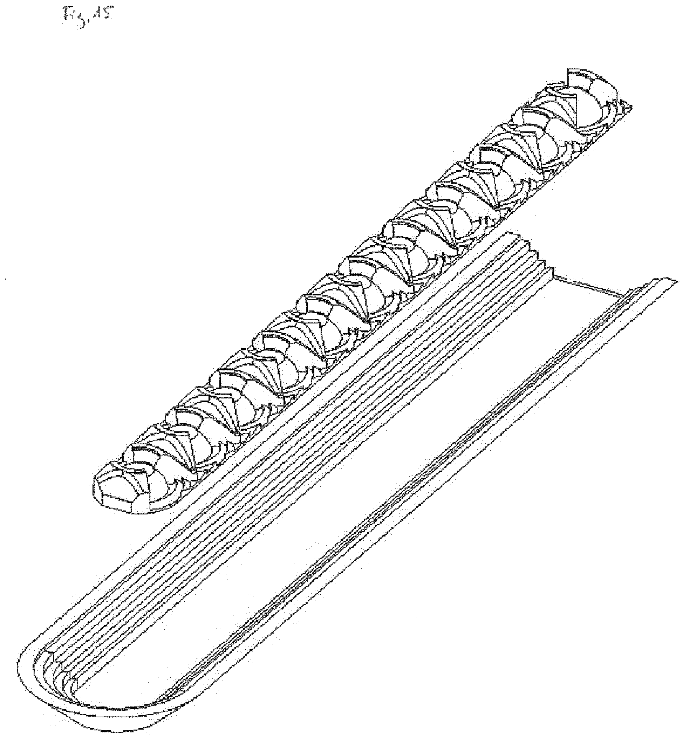

Bei den beiden, in den Figuren 13 und 14 skizzierten Beispielen erstreckt sich der Seitenbereich 4 mit Bezug auf die Längsachse L auf zwei gegenüberliegenden Seiten des Hauptbereichs 1. Bei dem in Fig. 15 nach Art einer Explosionsdarstellung gezeigten Beispiel sind demgegenüber die beiden länglichen Abschnitte des Seitenbereichs 4, die sich parallel zur der Längsachse L erstrecken, an einem Stirnende durch einen bogenförmigen Abschnitt miteinander verbunden, so dass sich der Seitenbereich 4 auf drei Seiten um den Hauptbereich 1 herum erstreckt. Im Allgemeinen kann die Gestaltung auch so sein, dass der Seitenbereich 4 auch an dem entsprechend gegenüberliegenden Stirnende analog gestaltet ist, so dass er sich um den Hauptbereich 1 herum erstreckend gestaltet ist, vorzugsweise ringförmig geschlossen. Eine solche Gestaltung eignet sich beispielsweise besonders, wenn das optische Element bei einer Feuchtraumleuchte verwendet werden soll. Hier können auch vorteilhaft eine integrierte Dichtungsvorrichtung und Verspannungselemente zur Verbindung mit einem entsprechenden Leuchtengehäuse vorgesehen sein.

Durch entsprechende Gestaltung des Seitenbereichs 4 lässt sich somit insbesondere eine einseitige, zweiseitige, dreiseitige oder vierseitige Indirekt-Beleuchtung erzielen.

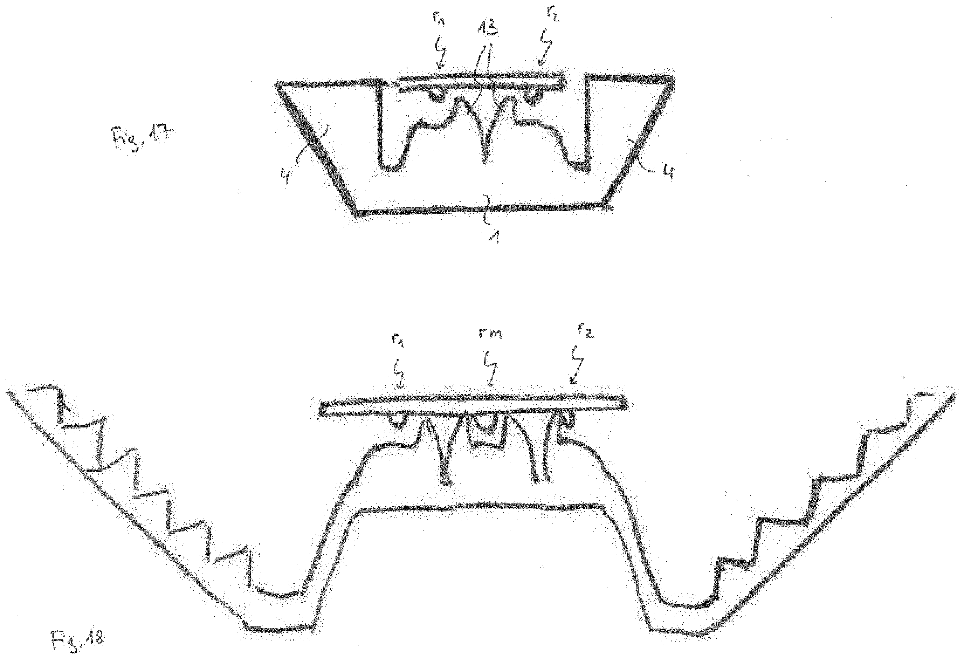

In den Figuren 17 und 18 sind weitere alternative Ausführungsformen skizziert. In Fig. 17 ist ein Querschnitt normal zu der Längsachse *L* gezeigt. Hier sind zwei Reihen *r1*, *r2* von LEDs parallel nebeneinander angeordnet, wobei jeder LED-Reihe *r1, r2* entsprechende Abschnitte des Hauptbereichs 1 zugeordnet sind. Vorzugsweise weisen die Kollimatoren 13 in diesem Fall lediglich jeweils auf der nach außen weisenden Seite einen Freischnitt auf, also insbesondere innenliegend keinen Freischnitt.

Der Seitenbereich 4 kann, wie hier skizziert, derart gestaltet sein, dass er lediglich einen Prisma-Bereich aufweist, also keine Stufenbildung, wie oben gezeigt. Hierdurch lässt sich eine besonders homogene Lichtverteilung zur Seite erzeugen, bei der sich insbesondere eine Streifenbildung vermeiden lässt. Diese Ausführung eignet sich besonders für eine flache Gestaltung des optischen Elements und beispielswiese für Mid-Power oder Low-Power LEDs.

Gemäß der in Fig. 18 skizzierten Weiterbildung ist zwischen zwei entsprechend ausgebildeten LED-Reihen *r1, r2* noch eine mittlere LED-Reihe rm vorgesehen, deren Kollimatoren in üblicher Weise gestaltet sind, also allseits um die entsprechenden Linsenbereiche umlaufend gestaltet sind. Natürlich können auch noch mehr Reihen gebildet sein. Auf diese Weise sind also flächig bzw. matrixartig angeordnete Abschnitte gebildet.

Die Primäroptik ist bei dieser Ausführung nach rückwärts bzw. nach "innen" versetzt ausgebildet. Auch diese Ausführungsform eignet sich beispielswiese für Mid-Power oder Low-Power LEDs.

Mit einer erfindungsgemäßen LED-Anordnung bzw. mit einer erfindungsgemäßen Leuchte lässt sich erzielen, dass das von lediglich einer Lichtquelle abgegebene Licht sowohl zur Erzeugung einer direkten Beleuchtung, als auch zur Erzeugung einer indirekten Beleuchtung verwendet werden kann.

Eine Leuchte mit einer entsprechenden LED-Anordnung eignet sich beispielsweise besonders als Deckenanbauleuchte, weil sich in diesem Fall mit den zweiten Lichtstrahlen *L2* besonders geeignet eine Deckenaufhellung erzeugen lässt. Beispielsweise kann es sich bei der Leuchte um ein Lichtband handeln, das dafür vorgesehen ist, unmittelbar an der Decke montiert zu werden. Auch als Feuchtraumleuchte eignet sich eine solche Leuchte besonders.

Die Leuchte eignet sich auch als Einbauleuchte, wenn nämlich die Leuchte gegenüber der umgebenden Deckenfläche etwas nach unten übersteht, genauer gesagt, wenn die geometrischen Verhältnisse derart sind, dass die zur Seite abgegebenen Lichtstrahlen *L2* eine Deckenaufhellung erzeugen können.

Grundsätzlich eignet sich die Leuchte auch als Pendelleuchte, wenngleich hier grundsätzlich eine gleichmäßige Aufhellung der Decke unmittelbar über der Leuchte nicht einfach zu realisieren ist.

## Patentansprüche

1. Optisches Element zur Beeinflussung eines von wenigstens einer LED abgestrahlten Lichts, aufweisend
- einen Hauptbereich (1) mit einer rückwärtigen Lichteintrittsfläche (2) und einer vorderen Lichtaustrittsfläche (3), wobei die vordere Lichtaustrittsfläche (3) zur Abgabe eines Teils des Lichts (*L1*) nach vorne (*R1*) ausgestaltet ist,
- einen flügelartig an den Hauptbereich (1) angegliederten Seitenbereich (4) mit einer weiteren Lichtaustrittsfläche (5) für eine Abgabe eines weiteren Teils des Lichts *(L2, L3*),
**dadurch gekennzeichnet,**
**dass** die weitere Lichtaustrittsfläche (5) für die Abgabe des weiteren Teils des Lichts (*L2, L3*) in eine seitliche Richtung (R2) und/oder in eine rückwärtige Richtung (*R3*) ausgestaltet ist,
wobei die Lichteintrittsfläche (2) einen mittleren Bereich (21) umfasst, sowie einen Mantelbereich (22), wobei sich der Mantelbereich (22) lediglich teilweise um den mittleren Bereich (21) herum erstreckt und/oder an unterschiedlichen Stellen unterschiedliche Höhen aufweist.

2. Optisches Element nach Anspruch 1,
bei dem der mittlere Bereich (21) konvex ist.

3. Optisches Element nach Anspruch 1 oder 2,
das derart gestaltet ist, dass der weitere Teil des Lichts (*L2, L3*) neben dem Mantelbereich (22) vorbei strahlt und anschließend den Seitenbereich (4) erreicht.

4. Optisches Element nach einem der vorhergehenden Ansprüche,
bei der der Seitenbereich (4) einen ersten Oberflächenbereich (41) und einen, Letzterem gegenüberliegenden zweiten Oberflächenbereich (42) aufweist, wobei diese beiden Oberflächenbereiche (41, 42) zur Lenkung des weiteren Teils des Lichts (*L2, L3*) ausgestaltet sind.

5. Optisches Element nach Anspruch 4,
bei dem der erste Oberflächenbereich (41) Teil einer, an dem Seitenbereich (4) ausgebildeten, vorzugsweise linearen Prismenstruktur (43) ist.

6. Optisches Element nach Anspruch 4 oder 5,
bei dem der zweite Oberflächenbereich (42) einen Teil der weiteren Lichtaustrittsfläche (5) bildet.

7. Optisches Element nach einem der Ansprüche 4 bis 6,
bei dem der zweite Oberflächenbereich (42) dazu ausgestaltet ist, den weiteren Teil des Lichts *(L2, L3*) zumindest teilweise für eine Abgabe in die seitliche Richtung (R2) zu brechen und/oder zumindest teilweise für eine Abgabe in die rückwärtige Richtung (*R3*) total zu reflektieren.

8. Optisches Element nach einem der vorhergehenden Ansprüche,
bei dem der Hauptbereich (1) einen ersten Abschnitt (*a1*) aufweist, an dem die rückwärtige Lichteintrittsfläche (2) und die vordere Lichtaustrittsfläche (3) ausgebildet sind, sowie wenigstens einen weiteren Abschnitt (*a2*, *a3*), der analog zu dem ersten Abschnitt (*a1*) gestaltet ist.

9. Optisches Element nach Anspruch 8,
bei dem der erste Abschnitt (*a1*) und der wenigstens eine weitere Abschnitt (*a2*, *a3*) sich entlang einer Längsachse (*L*) erstreckend angeordnet sind.

10. Optisches Element nach einem der vorhergehenden Ansprüche,
bei dem der Hauptbereich (1) und der Seitenbereich (4) einstückig ausgebildet sind oder aus zwei getrennten Bauteilen zusammengesetzt gestaltet sind.

11. Optisches Element nach einem der vorhergehenden Ansprüche,
bei dem der Seitenbereich (4) sich um den Hauptbereich (1) herum erstreckend gestaltet ist, vorzugsweise ringförmig geschlossen.

12. Optisches Element nach einem der vorhergehenden Ansprüche,
in Form eines Spritzgussteils.

13. LED-Anordnung, aufweisend
- ein optisches Element nach einem der vorhergehenden Ansprüche und
- wenigstens eine LED, die derart angeordnet ist, dass ein von der LED abgestrahltes Licht über die rückwärtige Lichteintrittsfläche (2) in das optische Element eintritt und ein Teil des Lichts (*L1*) über die vordere Lichtaustrittsfläche (3) nach vorne (*R1*) abgegeben wird und ein weiterer Teil des Lichts (*L2, L3*) über die weitere Lichtaustrittsfläche (5) in eine seitliche Richtung (R2) und/oder in eine rückwärtige Richtung (*R3*) abgegeben wird.

14. Leuchte, insbesondere in Form einer Deckenleuchte, aufweisend
- eine LED-Anordnung nach Anspruch 13,
wobei die Leuchte derart gestaltet ist, dass in einer, für einen Betrieb der Leuchte vorgesehenen Orientierung der nach vorne (*R1*) abgegebene Teil des Lichts (*L1*) zur Erzeugung einer Direktbeleuchtung nach unten abgegeben wird und der weitere Teil des Lichts (*L2, L3*) zur Erzeugung einer indirekten Beleuchtung abgegeben wird.

## Claims

1. An optical element for influencing a light emitted by at least one LED, having
- a main area (1) with a rear light inlet surface (2) and a front light outlet surface (3), wherein the front light outlet surface (3) is designed to output a part of the light (L₁) forward (R₁),
- a side area (4), which is joined to the main area (1) in the manner of a wing with a further light outlet surface (5) for an outputting of a further part of the light (L₂, L₃),
**characterized in**
**that** the further light outlet surface (5) is designed for the outputting of the further part of the light (L₂, L₃) in a lateral direction (R₂) and/or in a backward direction (R₃),
wherein the light inlet surface (2) comprises a central area (21), as well as a casing area (22), wherein the casing area (22) extends only partially around the central area (21) and/or has different heights at different places.

2. An optical element according to Claim 1,
in which the central area (21) is convex.

3. An optical element according to Claim 1 or 2,
which is designed in such a manner that the further part of the light (L₂, L₃) radiates passed the casing area (22) and then reaches the side area (4).

4. An optical element according to any one of the preceding claims,
in which the side area (4) has a first surface area (41) and a second surface area (42) situated opposite the latter, wherein both of these surface areas (41, 42) are designed to guide the further part of the light (L₂, L₃).

5. An optical element according to Claim 4,
in which the first surface area (41) is part of a preferably linear prism structure (43) arranged on the side area (4).

6. An optical element according to Claim 4 or 5,
in which the second surface area (42) forms a part of the further light outlet surface (5).

7. An optical element according to any one of Claims 4 to 6,
in which the second surface area (42) is designed to refract the further part of the light (L₂, L₃) at least partially for an outputting in the lateral direction (R₂) and/or reflect it totally at least partially for an outputting in the backward direction (R₃).

8. An optical element according to any one of the preceding claims,
in which the main area (1) has a first section (α₁), on which the backward light inlet surface (2) and the front light outlet surface (3) are arranged, as well as at least one further section (α₂,α₃), which is designed similarly to the first section (α₁).

9. An optical element according to Claim 8,
in which the first section (α₁) and at least one further section (α₂,α₃) are arranged extending along a longitudinal axis (L).

10. An optical element according to any one of the preceding claims,
in which the main area (1) and the side area (4) are formed as one piece or are designed composed of two separate components.

11. An optical element according to any one of the preceding claims,
in which the side area (4) is designed extending around the main area (1), preferably closed in an annular manner.

12. An optical element according to any one of the preceding claims,
in the form of an injection molded part.

13. A LED arrangement, having
- an optical element according to any one of the preceding claims and
- at least one LED, which is arranged in such a manner that a light emitted by the LED enters via the backward light inlet surface (2) into the optical element and a part of the light (L₁) is outputted forward (R₁) via the front light outlet surface (3) and a further part of the light (L₂, L₃) is outputted via the further light outlet surface (5) in a lateral direction (R₂) and/or in a backward direction (R₃).

14. A light, in particular in the form of a ceiling light, having
- a LED arrangement according to Claim 13,
wherein the light is designed in such a manner, that in an orientation provided for an operation of the light the part of the light (L1) outputted forward (R1) is outputted for the generation of a direct illumination downwards and the further part of the light (L₂, L₃) is outputted for the generation of an indirect illumination.

## Revendications

1. Elément optique destiné à influencer une lumière émise par au moins une LED, présentant
- une zone principale (1) avec une surface d'entrée de lumière (2) arrière et une surface de sortie de lumière (3) avant, la surface de sortie de lumière (3) avant étant constituée pour l'émission d'une partie de la lumière (*L1*) vers l'avant (R1),
- une zone latérale (4) rattachée à la façon d'une aile à la zone principale (1), avec une autre surface de sortie de lumière (5) pour une émission d'une autre partie de la lumière *(L2, L3*),
**caractérisé en ce que**
l'autre surface de sortie de lumière (5) pour l'émission de l'autre partie de la lumière *(L2, L3)* est constituée dans une direction latérale (R2) et/ou dans une direction arrière (R3),
la surface d'entrée de lumière (2) comprenant une zone centrale (21) ainsi qu'une zone d'enveloppe (22), la zone d'enveloppe (22) s'étendant uniquement partiellement autour de la zone centrale (21) et/ou présentant des hauteurs différentes à différents endroits.

2. Elément optique selon la revendication 1,
dans lequel la zone centrale (21) est convexe.

3. Elément optique selon la revendication 1 ou 2,
qui est formé de telle sorte que l'autre partie de la lumière (*L2, L3*) rayonne en passant près de la zone d'enveloppe (22) et puis atteint la zone latérale (4).

4. Elément optique selon l'une des revendications précédentes,
dans lequel la zone latérale (4) présente une première zone superficielle (41) et une deuxième zone superficielle (42) opposée à la précédente, ces deux zones superficielles (41, 42) étant constituées pour la direction de l'autre partie de la lumière (*L2, L3*)*.*

5. Elément optique selon la revendication 4,
dans lequel la première zone superficielle (41) fait partie d'une structure prismatique (43) de préférence linéaire constituée sur la zone latérale (4).

6. Elément optique selon la revendication 4 ou 5,
dans lequel la deuxième zone superficielle (42) forme une partie de l'autre surface de sortie de lumière (5).

7. Elément optique selon l'une des revendications 4 à 6,
dans lequel la deuxième zone superficielle (42) est constituée pour réfracter l'autre partie de la lumière (*L2, L3*) au moins partiellement pour une émission dans la direction latérale (*R2*) et/ou pour la réfléchir totalement au moins partiellement pour une émission dans la direction arrière (R3).

8. Elément optique selon l'une des revendications précédentes,
dans lequel la zone principale (1) présente un premier tronçon (*α1*) sur lequel la surface d'entrée de lumière (2) arrière et la surface de sortie de lumière (3) avant sont constituées, ainsi qu'au moins un autre tronçon (*α2, α3*) qui est formé de façon analogue au premier tronçon (*α1*).

9. Elément optique selon la revendication 8,
dans lequel le premier tronçon (*α1*) et l'autre tronçon (*α2*, α*3*) au moins au nombre de un sont disposés en s'étendant le long d'un axe longitudinal (L).

10. Elément optique selon l'une des revendications précédentes,
dans lequel la zone principale (1) et la zone latérale (4) sont constituées d'une seule pièce ou sont formées en étant composées de deux composants séparés.

11. Elément optique selon l'une des revendications précédentes,
dans lequel la zone latérale (4) est formée en s'étendant autour de la zone principale (1), de préférence en étant fermée de manière annulaire.

12. Elément optique selon l'une des revendications précédentes,
en forme de pièce moulée par injection.

13. Ensemble de LED, présentant
- un élément optique selon l'une des revendications précédentes,
- au moins une LED qui est disposée de telle sorte qu'une lumière émise par la LED entre dans l'élément optique via la surface d'entrée de lumière (2) arrière, et une partie de la lumière (*L1*) est émise vers l'avant (*R1*) via la surface de sortie de lumière (3) avant, et une autre partie de la lumière (*L2, L3*) est émise dans une direction latérale (R2) et/ou dans une direction arrière (R3) via l'autre surface de sortie de lumière (5) .

14. Lampe, en particulier sous la forme d'une lampe de plafond, présentant
- un ensemble de LED selon la revendication 13,
la lampe étant formée de telle sorte que, dans une orientation prévue pour un fonctionnement de la lampe, la partie de la lumière (*L1*) émise vers l'avant (*R1*) est émise vers le bas pour la production d'un éclairage direct, et l'autre partie de la lumière (*L2, L3*) est émise pour la production d'un éclairage indirect.
